# EUROPÄISCHE PATENTSCHRIFT

(11) **EP 1 378 369 B1**
(45) Veröffentlichungstag und Bekanntmachung des Hinweises auf die Patenterteilung: **01.12.2004**
(21) Anmeldenummer: 02405550.1
(22) Anmeldetag: 01.07.2002
(51) Int. Cl.: B41M 5/00, H01B 1/20, H01M 4/04

(54) **Verfahren zur Beschichtung eines bewegten Trägers**
Method for coating a moving web
Procédé pour le revêtement d'un support en mouvement

(43) Veröffentlichungstag der Anmeldung: 07.01.2004
(73) Patentinhaber: ILFORD Imaging Switzerland GmbH, 1723 Marly 1 (CH)
(72) Erfinder: Cohu, Olivier, 1723 Marly 2 (CH)

(56) Entgegenhaltungen:
- EP-A- 0 493 100
- EP-A- 0 634 286
- EP-A- 1 120 281

## Beschreibung

### Technisches Gebiet

Die vorliegende Erfindung bezieht sich auf ein Verfahren zur Beschichtung eines bewegten Trägers vorzugsweise zur Herstellung von Aufzeichnungsmaterialien, darin eingeschlossen unter anderem Aufzeichnungsmaterialien für den Tintenstrahldruck, und zur Herstellung von elektrisch aktiven Filmen.

### Stand der Technik

Im allgemeinen werden zur Herstellung einer Beschichtung auf einem flexiblen Träger eine oder mehrere Beschichtungslösungen, die alle notwendigen Bestandteile enthalten, als dünne Schicht oder dünne Schichten auf den bewegten Träger aufgebracht. Der beschichtete Träger wird anschliessend getrocknet. Häufig wird zur Trocknung solcher beschichteter bewegter Träger in einem Düsentrockner heisse Luft durch ein System von Düsen mit hoher Geschwindigkeit auf die Oberfläche des beschichteten Trägers geblasen. In diesem Verfahren hat aber die Oberfläche der flüssigen Schichten, normalerweise mit hohem Wassergehalt und tiefer Viskosität, die Tendenz, wegen der ständigen Druckschwankungen im Trockner, eine unebene Oberfläche auszubilden. Bei Verwendungszwecken, die eine gute Beschichtungshomogenität verlangen, wie beispielsweise bei photographischen Materialien oder Aufzeichnungsmaterialien für den Tintenstrahldruck, kann dieses Problem dadurch gelöst werden, dass die verwendeten Beschichtungslösungen ein thermoreversibel erstarrendes Bindemittel wie beispielsweise Gelatine enthalten. Nachdem die das thermoreversibel erstarrende Bindemittel enthaltenden Lösungen auf den bewegten Träger aufgebracht worden sind, wird dieser abgekühlt, wobei die aufgetragenen Lösungen erstarren oder gelieren. Dadurch werden sie weniger empfindlich gegen die von der aufprallenden Luft im Trockner erzeugten Oberflächenstörungen.

Es ist wichtig, dass die Erstarrungsgeschwindigkeit beim Abkühlen hoch ist, da andernfalls das erstarrte Bindemittel nicht genügend fest wäre, ausser es würden sehr lange Abkühlzeiten verwendet. Bei einer vorgegebenen Beschichtungseinrichtung, in der die Länge der Kühlzone vorgegeben ist, können verlängerte Abkühlzeiten nur durch eine Erniedrigung der Giessgeschwindigkeit erreicht werden.

Nur wenige Bindemittel zeigen ein thermoreversibles Erstarrungsverhalten.

Wenn die Beschichtungslösungen kein thermoreversibel erstarrendes Bindemittel enthalten, führt die Abkühlung der vergossenen Lösungen normalerweise nicht zu einem befriedigenden Verhalten der Oberfläche gegenüber den durch die während des Trocknungsvorgangs aufprallende Luft verursachten Störungen.

Es wäre daher wünschenswert, ein Verfahren zu haben, das es erlauben würde, Lösungen zu vergiessen, die kein thermoreversibel erstarrendes Bindemittel enthalten. Diese Beschichtungslösungen hätten während des Beschichtungsvorgangs eine tiefe Viskosität und würden anschliessend, nachdem sie auf den bewegten Träger aufgebracht worden sind, rasch erstarren.

Ein solches Verfahren besteht darin, in die Beschichtungslösungen vor dem Aufbringen auf den bewegten Träger mittels bekannter Methoden ein Verdickungsmittel einzubringen. Dieses Vorgehen ergibt aber zusätzliche Probleme wie schlechte Beschichtungslösungsstabilität, es verlangt die Förderung hochviskoser Flüssigkeiten und es entstehen Beschichtungsstörungen wegen der Bildung von Ausfällungen und Agglomeraten. Bei Beschichtungslösungen, die Polyvinylalkohol enthalten, schliessen solche bekannten Verdickungsmittel oder erstarrungsfördernden Mittel Borsäure und/oder Borate ein.

In der Patentanmeldung EP 0'634'286 wird eine Beschichtungslösung beschrieben, die ein Sol aus Aluminiumoxid und Polyvinylalkohol als Bindemittel und zusätzlich Borsäure enthält. Beim Aufbringen dieser Beschichtungslösung auf einen Träger erhält man nach anschliessender Trocknung ein Aufzeichnungsmaterial für den Tintenstrahldruck. Dieses Aufzeichnungsmaterial weist eine poröse Tintenempfangsschicht aus nanoporösem Aluminiumoxid-hydroxid auf, welches die verschiedenen Farbstoffe der Tintenstrahldruckflüssigkeiten aufnehmen und fixieren kann. Die in dieser Patentanmeldung beschriebene Beschichtungslösung enthält Borsäure und/oder Borate, um die Rissbildung in den getrockneten Aufzeichnungsmaterialien zu verhindern. In einem solchen Fall muss aber die erstarrungsfördernde Wirkung der Borsäure minimalisiert werden, damit die Viskosität der Beschichtungslösung zeitlich konstant auf einer Höhe bleibt, die in den verwendeten Beschichtungsverfahren zulässig ist. Das wird normalerweise dadurch erreicht, dass die Beschichtungslösung mit einem Lösungsmittel, vorzugsweise Wasser, verdünnt wird. Die erstarrungsfördernde Wirkung der Borsäure in der in der Patentanmeldung EP 0'634'286 beschriebenen Beschichtungslösung ist daher ein Nachteil während des Beschichtungsvorgangs. Diese Wirkung wäre aber auf dem beschichteten Träger sehr erwünscht, um die Erstarrung der aufgebrachten Beschichtungslösung zu beschleunigen und dadurch Beschichtungsfehler zu eliminieren oder deren Anzahl zu reduzieren.

In der Patentanmeldung GB 2'132'784 wird die Verwendung eine Übergusses beschrieben, der eine Mischung von Polyvinylalkohol und Borsäure zusammen mit einem anorganischen Pigment enthält. Die Anmeldung gibt keine Hinweise darauf, die Erstarrung der Beschichtungslösung dadurch beeinflusst werden könnte, wenn die Borsäure aus der polyvinylalkoholhaltigen Beschichtungslösung entfernt würde.

Im Patent US 4'877'686 wird die Herstellung eines Aufzeichnungsmaterials für den Tintenstrahldruck beschrieben, das in der Tintenempfangsschicht Polyvinylalkohol als Bindemittel, Borsäure und einen Füllstoff mit hoher Absorptionsfähigkeit enthält, wobei die Menge des Bindemittels gewichtsmässig 10 % bis 100 % bezogen auf den Füllstoff beträgt.

Im Patent US 5'034'249 wird die Herstellung von photographischen Materialien beschrieben, wobei eine Beschichtungslösung einen Soforthärter, aber praktisch kein Bindemittel enthält und die darunter liegenden gelatinehaltigen Schichten durch den Soforthärter vernetzt werden.

In der Patentanmeldung EP 1'111'452 wird ein Verfahren zur Beschichtung eines bewegten Trägers beschrieben, in dem auf einen gegebenenfalls mit einer oder mehreren Schichten vorbeschichteten Träger in einem ersten Schritt eine Beschichtungslösung aufgebracht wird, die eine viskositätserhöhende Substanz enthält. Die so hergestellte Schicht wird getrocknet und anschliessend mit einer zweiten Lösung beschichtet, die ein filmbildendes Bindemittel enthält, wobei eine Bildaufnahmeschicht gebildet wird. In einer bevorzugten Ausführungsart der Erfindung zur Herstellung von Aufzeichnungsmaterialien für den Tintenstrahldruck ist ein Borat die viskositätserhöhende Substanz und das filmbildende Bindemittel in der Tintenaufnahmeschicht ist Polyvinylalkohol. Es wird erläutert, dass ein wesentlicher Teil der im ersten Schritt auf den Träger aufgebrachten viskositätserhöhenden Substanz im zweiten Beschichtungsschritt solubilisiert wird und in die Tintenaufnahmeschicht diffundiert, wo sie mit dem filmbildenden Bindemittel in Wechselwirkung tritt und dabei auf kontrollierte Art und Weise die Viskosität der zweiten auf den Träger aufgebrachten Beschichtungslösung erhöht. Das Aufbringen und die Trocknung der ersten, die viskositätserhöhende Substanz enthaltenden Schicht sind aber kostspielig und es wäre wünschenswert, wenn dieser erste Verfahrensschritt vermieden werden könnte.

In der Patentanmeldung EP 1'120'281 wird ein Aufzeichnungsmaterial für den Tintenstrahldruck beschrieben, welches aus mindestens zwei Tintenaufnahmeschichten auf einem Träger besteht, worin eine Schicht ein Pigment und ein Bindemittel und die andere Schicht nanoporöse Teilchen (ausgewählt aus Siliziumdioxid, Aluminiumsilikat und α-Al₂O₃, θ-Al₂O₃, δ-Al₂O₃ und γ-Al₂O₃ mit einer mittleren Teilchengrösse von 1 µm oder weniger) und gegebenenfalls eine Verbindung (ausgewählt aus Phenolverbindungen, Borsäure, Boraten und Cyclodextrinverbindungen) zur Verbesserung der Lichtbeständigkeit enthält.

In der Patentanmeldung EP 0'493'100 wird ein Aufzeichnungsmaterial für den Tintenstrahldruck beschrieben, das aus einem Träger besteht, auf den zuerst mindestens 0.1 g/m² Borsäure oder Borax und anschliessend eine Tintenaufnahmeschicht bestehend aus synthetischem Siliziumdioxid und Polyvinylalkohol als Bindemittel aufgebracht wurde.

Es besteht daher das Bedürfnis nach einem verbesserten Beschichtungsverfahren ohne einen zweiten Beschichtungsschritt, bei dem Beschichtungsfehler eliminiert oder deren Anzahl vermindert werden können.

### Beschreibung der Erfindung

Wie vorhin erwähnt wurde, wird in vielen Beschichtungsanlagen zur Trocknung durch ein System von Düsen heisse Luft mit hoher Geschwindigkeit auf die Oberfläche des beschichteten Trägers geblasen. Während der Trocknung haben die auf den bewegten Träger aufgebrachten Beschichtungsflüssigkeiten die Tendenz, wegen der ständigen Druckschwankungen im Trockner eine unebene Oberfläche auszubilden. Flüssige Schichten mit sehr tiefer Viskosität können durch die aufprallende Luft sogar von der Oberfläche des Trägers weggeblasen werden. Eine Möglichkeit zur Lösung dieses Problems liegt darin, die Erstarrung der Beschichtungslösungen unmittelbar nach ihrem Aufbringen auf den bewegten Träger zu fördern. Unter dem Begriff "Erstarrung" ist der Übergang von einem flüssigen Zustand mit relativ tiefer Viskosität (typischerweise weniger als 200 mPas) zu einem Zustand mit viskosplastischem rheologischem Verhalten mit einer Viskosität über 1000 mPas bei tiefen Scherraten zu verstehen.

Die Erfindung erlaubt die Beschichtung von bewegten Trägern mit einer niedrigen Anzahl von Beschichtungsfehlern, insbesondere bei hohen Beschichtungsgeschwindigkeiten. Eine "viskositätserhöhende" oder "erstarrungsfördernde" Substanz wird ausgewählt, welche die Eigenschaft besitzt, mit mindestens einer der in der Beschichtungslösung enthaltenen Verbindungen in Wechselwirkung zu treten, die Viskosität der Beschichtungslösung zu erhöhen, die Erstarrung derselben zu beschleunigen oder sie zu vernetzen. Die Begriffe "viskositätserhöhende Substanz" oder "erstarrungsfördernde Substanz" können sich auf eine Verbindung beziehen, welche die Viskosität einer bindemittelhaltigen Lösung durch Wechselwirkung mit dem Bindemittel erhöhen kann. Im Fall einer Lösung, die eine konzentrierte kolloidale Dispersion anorganischer Pigmente enthält, kann sich eine erstarrungsfördernde Substanz auf eine Verbindung mit der Eigenschaft beziehen, die Viskosität der Lösung durch die Zerstörung ihrer kolloidalen Stabilität zu erhöhen.

Die viskositätserhöhende oder erstarrungsfördernde Substanz ist in einer Hilfsbeschichtungslösung enthalten, die zusammen mit mindestens einer Hauptbeschichtungslösung auf den bewegten Träger aufgebracht wird. Der beschichtete Träger wird anschliessend getrocknet. Diese zweite Hauptbeschichtungslösung enthält die Bestandteile, welche die Produkteigenschaften bestimmen.

Die die erstarrungsfördernde Substanz enthaltende Hilfsbeschichtungslösung kann andere Bestandteile, wie beispielsweise oberflächenaktive Verbindungen, enthalten, um die Eigenschaften des Endprodukts festzulegen, unter der Voraussetzung, dass eine allfällige Wechselwirkung anderer Bestandteile mit der viskositätserhöhenden oder erstarrungsfördernden Substanz nicht zu einem instabilen Viskositätsverhalten der Hilfsbeschichtungslösung führt. Zusätze ohne erstarrungsfördernde Eigenschaften können ebenfalls aus der Hauptbeschichtungslösung entfernt und in die Hilfsbeschichtungslösung eingebracht werden.

Die Möglichkeit, den Beschichtungsvorgang bei hohen Geschwindigkeiten durchzuführen, ist ein Vorteil dieses Verfahrens, da die Beschichtungsflüssigkeiten mit den für schnelle Beschichtungsvorgänge erforderlichen relativ tiefen Viskositäten auf den bewegten Träger aufgebracht werden können und dann auf dem Träger so rasch erstarren, dass die Oberfläche der Schichten durch die im Trockner durch die Düsen aufprallende heisse Luft nicht mehr gestört wird. Ein weiterer Vorteil ist die Möglichkeit, erstarrungsfördernde oder vernetzende Substanzen ohne Beeinträchtigung des Viskositätsverhaltens der Beschichtungslösungen einsetzen zu können.

Die Erfindung nach Anspruch 1 bezieht sich auf ein Verfahren, bei dem Lösungen, die eine oder mehrere nanokristalline, nanoporöse anorganische Verbindungen und eines oder mehrere Bindemittel enthalten, auf einen bewegten Träger aufgebracht werden können und, nach der Trocknung, je eine dünne Schicht bilden, welche die nanokristallinen, nanoporösen anorganischen Verbindungen und die Bindemittel enthält, wobei die Menge der Bindemittel gewichtsmässig 2 % bis 30 % der Menge der nanokristallinen, nanoporösen anorganischen Verbindungen beträgt. Solche, vorzugsweise durchsichtigen, Schichten, die nanokristalline, nanoporöse anorganische Verbindungen enthalten, werden beispielsweise als elektrisch aktive Filme in den verschiedensten Produkten wie Batterien, Solarzellen, elektrochrome Gläser oder in Aufzeichnungsmaterialien für den Tintenstrahldruck eingesetzt.

Typische nanokristalline, nanoporöse anorganische Verbindungen sind die nanoporösen Oxide von Aluminium oder Silizium, die Oxid-hydroxide von Aluminium, Übergangsmetalloxide, Übergangsmetallchalkogenide oder deren Lithium-Einschlussverbindungen.

Bei der Herstellung von Tintenaufnahmeschichten für Aufzeichnungsmaterialien für den Tintenstrahldruck oder von elektrisch aktiven Schichten für elektrisch aktive Filme, welche nanokristalline, nanoporöse anorganische Verbindungen enthalten, enthält die Hauptbeschichtungslösung mindestens eine kolloidale Dispersion dieser nanokristallinen, nanoporösen anorganischen Verbindungen sowie ein oder mehrere filmbildende Bindemittel in einer Menge, die gewichtsmässig 30 % der Menge der nanokristallinen, nanoporösen anorganischen Verbindungen nicht übersteigt.

Nach dem Auftrag der Hauptbeschichtungslösung zusammen mit der Hilfsbeschichtungslösung, gegebenenfalls zusammen mit noch anderen Hilfsschichten, diffundiert die viskositätserhöhende oder erstarrungsfördernde Substanz aus der Hilfsbeschichtungslösung in die Hauptbeschichtungslösung und tritt mit mindestens einem ihrer Bestandteile in Wechselwirkung, wodurch die Viskosität der Hauptbeschichtungslösung stark ansteigt. Der Viskositätsanstieg kann durch den Zusatz von Beschichtungshilfsmitteln wie niedermolekularen Verdünnern (beispielsweise Wasser) oder durch die Anpassung des pH-Werts oder der lonenstärke der Hilfsbeschichtungslösung gesteuert werden. Die Hauptbeschichtungslösung kann dadurch zur Erstarrung gebracht oder vernetzt werden.

Die Hilfsbeschichtungslösung kann oberhalb oder unterhalb der Hauptbeschichtungslösung (oder Hauptbeschichtungslösungen) angeordnet werden. In einer bevorzugten Ausführungsart der Erfindung liegt die Hilfsschicht an der obersten Stelle aller Schichten des Gesamtsystems.

In einer weiteren Ausführungsart der Erfindung wird die erstarrungsfördernde Substanz bei der Herstellung der Hauptbeschichtungslösungen, welche die Bindemittel und die nanokristallinen, nanoporösen anorganischen Verbindungen enthalten, nicht verwendet und auch nicht unmittelbar vor dem Beginn des Beschichtungsvorgangs zugesetzt, beispielsweise durch Einspritzung in die Lösung. Es wird dem Mehrfachschichtsystem über die Hilfsbeschichtungslösung zugeführt. Die Hauptbeschichtungslösungen, welche die Bindemittel und die nanokristallinen, nanoporösen anorganischen Verbindungen enthalten, werden zusammen mit der Hiifsbeschichtungslösüng als mindestens zwei unterschiedliche Schichten auf den bewegten Träger aufgebracht. Die aufgetragenen Schichten werden abgekühlt und durch Aufblasen von heisser Luft durch ein System von Düsen getrocknet.

In einer anderen Ausführungsart der Erfindung kann die Hilfsbeschichtungslösung eine ähnliche Zusammensetzung haben wie die Hauptbeschichtungslösung - natürlich mit Ausnahme der Menge der erstarrungsfördernden Substanz - unter der Bedingung, dass die Konzentration der Hilfsbeschichtungslösung so stark erniedrigt wird, dass ihr Viskositätsstabilitätsverhalten annehmbar ist. Im allgemeinen ist der Feststoffgehalt einer solchen Hilfsbeschichtungslösung nicht höher als 60 % des Feststoffgehalts der Hauptbeschichtungslösung.

In einer nochmals anderen Ausführungsart der Erfindung kann die Viskositätsänderung der Hauptbeschichtungslösung, die eine oder mehrere kolloidale Verbindungen enthält, durch die Zerstörung der kolloidalen Stabilität bewirkt werden, ausgelöst durch eine Änderung des pH-Werts oder der lonenstärke, beispielsweise durch Diffusion einer Säure oder Base aus der Hilfsbeschichtungslösung in die zu erstarrende Hauptbeschichtungslösung.

Die in Aufzeichnungsmaterialien für den Tintenstrahldruck und in elektrisch aktiven Filmen verwendeten filmbildenden Bindemittel umfassen beispielsweise Polyurethane, Polyvinylalkohol, Acrylpolymere, Polyolefine, Polyester, Polyamide, Polycarbonate, Polyether, Polyharnstoffe und deren Mischungen. Im allgemeinen zeigen diese filmbildenden Polymere kein thermoreversibles Erstarrungsverhalten. Die Bindemittel müssen reaktive Gruppen enthalten, damit die Viskosität durch die erstarrungsfördernde Substanz erhöht wird. Ein bevorzugtes Bindemittel ist Polyvinylalkohol.

In einer bevorzugten Ausführungsart der Erfindung ist die erstarrungsfördernde Substanz ein Borat wie beispielsweise Natriumtetraborat-Dekahydrat oder Natriumborat, Borsäure, Abkömmlinge der Borsäure, Borsäureanhydrid und dergleichen, die zusammen mit Polyvinylalkohol als Bindemittel in der Hauptbeschichtungslösung verwendet werden. Weitere vernetzende oder erstarrungsfördernde Substanzen oder Verdickungsmittel können zusätzlich verwendet werden, um die Viskosität der Lösung, die das filmbildende Bindemittel enthält, weiter zu erhöhen. Ihre Wirksamkeit hängt von der speziellen Anwendungsart sowie vom eingesetzten Bindemittel ab, das vernetzt werden soll. Mögliche vernetzende Substanzen umfassen Aldehyde, Dialdehyde, Dihydroxydioxan, Glyoxal, Glutaraldehyd, Methylolmelamin, bifunktionelle oder polyfunktionelle Isocyanate, bifunktionelle oder polyfunktionelle Aziridine und Epoxide, Vinylsulfone und Triazine.

Bevorzugte nanokristalline, nanoporöse anorganische Verbindungen für die Herstellung von Aufzeichnungsmaterialien für den Tintenstrahldruck sind nanokristalline, nanoporöse Oxide von Aluminium oder Silizium oder Oxid-hydroxide von Aluminium, Glimmer oder Montmorillonit.

Speziell bevorzugte nanokristalline, nanoporöse Oxide sind kolloidales Siliziumdioxid oder kolloidales Aluminiumoxid, ein speziell bevorzugtes Oxid/hydroxid ist kolloidales Aluminiumoxid-hydroxid.

Die meistbevorzugten nanokristallinen, nanoporösen Oxide oder Oxid-hydroxide sind Pseudo-Böhmit, kolloidales γ-Al₂O₃ oder Pseudo-Böhmit, der 0.4 bis 4.2 Molprozent eines oder mehrerer Elemente der Gruppe der Seltenen Erden (Ordnungszahlen 57 bis 71 des Periodischen Systems der Elemente) bezogen auf Al₂O₃ enthält, so wie es in den Patentanmeldungen EP 0'407'720, EP 0'875'394 und EP 1'162'076 beschrieben wird.

Falls kolloidales Siliziumdioxid als nanokristallines, nanoporöses Oxid verwendet wird, ist es im bevorzugten Fall positiv geladen.

Die Dicke solcher Schichten im getrockneten Zustand liegt normalerweise zwischen 2 µm und 100 µm. Das bedeutet, dass die Beschichtungslösung in einer Menge zwischen 40 g/m² und 300 g/m² auf den Träger aufgebracht werden muss. Die Anfälligkeit der Beschichtung auf Störungen, die von der im Trocknungsvorgang aufprallenden heissen Luft hervorgerufen werden, wird dadurch verringert, dass der beschichtete Träger vor der Trocknung auf eine Temperatur von 10° C oder weniger abgekühlt wird, auch wenn keine Bindemittel mit thermoreversiblem Verhalten verwendet werden.

In Aufzeichnungsmaterialien für den Tintenstrahldruck kann die Hilfsschicht Bestandteil eines aus verschiedenen Schichten bestehenden Systems sein, das wenigstens eine Tintenaufnahmeschicht aufweist, die eines oder mehrere Bindemittel und nanokristalline, nanoporöse Metalloxide oder Oxid-hydroxide enthält, so wie es beispielsweise in der Patentanmeldung EP 1'000'767 beschrieben wird.

In elektrisch aktiven Filmen kann die Hilfsschicht Bestandteil eines aus verschiedenen Schichten bestehenden Systems sein, das wenigstens eine elektrisch aktive Schicht aufweist, die eines oder mehrere Bindemittel und nanokristalline, nanoporöse Übergangsmetalloxide, Übergangsmetallchalkogenide oder deren Lithium-Einschlussverbindungen enthält, so wie es beispielsweise in der Patentanmeldung EP 1'244'114 (stand der Technik nach Artikel 54(3) und (4) EPÜ) beschrieben wird.

Die verschiedensten Träger können zur Herstellung von Aufzeichnungsmaterialien für den Tintenstrahldruck oder von elektrisch aktiven Filmen verwendet werden. Sie umfassen beispielsweise, normales oder gestrichenes Papier, polyolefinbeschichtete Papiere, Polymerfilme wie Polyethylenterephthalat, Polyethylennaphthalat, Polyvinylchlorid, Polyimid, Polycarbonat oder Celluloseester.

Polyolefinbeschichtete Papiere und Polyethylenterephthalat sind bevorzugte Träger für Aufzeichnungsmaterialien für den Tintenstrahldruck. Polyethylenterephthalat, Polyethylennaphthalat, Polyvinylchlorid, Polyimid und Polycarbonat sind bevorzugte Träger für elektrisch aktive Filme.

Die Dicke dieser Träger variiert zwischen 50 µm und 500 µm, vorzugsweise zwischen 75 µm und 300 µm. Die Träger können gegebenenfalls Antioxidantien, antistatische Substanzen, Weichmacher, Farbstoffe, Pigmente und andere dem Fachmann bekannte Verbindungen enthalten.

Es ist auch möglich, faserförmige Textilmaterialien als Träger zu verwenden.

Um die Haftung der Tintenaufnahmeschicht oder der elektrisch aktiven Schicht auf dem Träger zu verbessern, ist es von Vorteil, den Träger vor dem Beschichtungsvorgang zuerst mit einer haftungsfördernden Substanz zu beschichten oder einer Koronaentladung auszusetzen.

Bei einem Träger, der zur Herstellung von Aufzeichnungsmaterialien für den Tintenstrahldruck bestimmt ist, wird auf mindestens eine Seite des Trägers eine Tintenaufnahmeschicht aufgebracht. Aufsicht-Aufzeichnungsmaterialien haben einen opaken Träger, Durchsicht-Aufzeichnungsmaterialien einen durchsichtigen Träger.

Gegebenenfalls kann auf die Rückseite des Trägers eine Rückschicht aufgebracht werden, um beispielsweise die Maschinengängigkeit, die Planlage und die Gleiteigenschaften des Aufzeichnungsmaterials zu verbessern.

Normalerweise enthält die Rückschicht ein Bindemittel und einen Füllstoff. Typische Füllstoffe sind amorphes und kristallines Siliziumdioxid, Polymethylmethacrylat, Polystyrolkügelchen, microkristalline Cellulose, Zinkoxid, Talk, Bariumsulfat, Titandioxid und dergleichen. Die Menge des Füllstoffs beträgt gewichtsmässig normalerweise weniger als 10 % der Bindemittelmenge. Die Grösse der Teilchen liegt zwischen 5 µm und 30 µm. Typische, in der Rückschicht verwendete Bindemittel sind Polymere wie Acrylate, Gelatine, Methacrylate, Polystyrol, Acrylamide, Polyvinylalkohol, Celluloseabkömmlinge und dergleichen. Die Rückschicht kann gegebenenfalls auch eine antistatische Substanz enthalten, um die elektrostatische Aufladung des Aufzeichnungsmaterials zu verhindern. Eine Tintenaufnahmeschicht kann gegebenenfalls auch auf die Rückseite aufgebracht werden.

Vorzugsweise werden auf den Träger des Aufzeichnungsmaterials eine oder mehreren Tintenaufnahmeschichten aufgebracht, die die in den Tinten enthaltenen Lösungsmittel aufnehmen können. Die Dicke einer solchen Schicht liegt normalerweise zwischen 10 µm und 50 µm. Die Tintenaufnahmeschicht enthält ein hydrophiles Bindemittel, beispielsweise natürlich vorkommende hydrophile Kolloide wie Gelatine, Albumin, Guar, Xanthan, Chitosan, Stärke und ihre Abkömmlinge, modifizierte Harze und modifizierte Stärke, Celluloseether und ihre Abkömmlinge, Polyvinyloxazolin und Polyvinylmethyloxazolin, Polyoxide, Polyether, Polyethylenimine, Polyvinylalkohol, Abkömmlinge des Polyvinylalkohols, Copolymere und

Gemische dieser Verbindungen. Polyvinylalkohol und seine Abkömmlinge sind die bevorzugten hydrophilen, flüssigkeitsaufnehmenden Bindemittel in Tintenaufnahmeschichten.

Tintenaufnahmeschichten können auch andere Zusätze enthalten, darin eingeschlossen Mattierungsmittel zur Verbesserung der Gleitfähigkeit und des Abriebverhaltens des Aufzeichnungsmaterials; Netzmittel zur Verbesserung der Gleichmässigkeit der Tintenaufnahmeschicht und zur Einstellung der Oberflächenspannung des getrockneten Materials; Fluoreszenzfarbstoffe; pH-regulierende Substanzen; Antischaummittel; Gleitmittel; Konservierungsmittel; farbstofffixierende Substanzen; Viskositätseinsteller; wasserabweisende Substanzen; Dispergiermittel; UV-Absorber; Beizmittel und dergleichen.

Auf ein Aufzeichnungsmaterial für den Tintenstrahldruck kann zusätzlich eine tintendurchlässige, tintenaufnehmende, die Klebrigkeit verhindernde Schicht aus hydrophilen Celluloseabkömmlingen wie beispielsweise Methylcellulose, Ethylcellulose, Hydroxyethylcellulose, Hydroxypropylcellulose, Natriumcarboxymethylcellulose oder Natriumcarboxyethylcellulose aufgebracht werden.

Bevorzugte nanokristalline, nanoporöse anorganische Verbindungen für die Herstellung elektrisch aktiver Filme sind nanokristalline, nanoporöse Übergangsmetalloxide, Übergangsmetallchalkogenide oder deren Lithium-Einschlussverbindungen. Besonders bevorzugt werden TiO₂, Ti₂O₃, Nb₂O₅, WO₃, V₂O₅, MoO₃, MnO₂, HfO₂, TiS₂, WS₂, TiSe₂, Fe₂O₃, Fe₃O₄, RuO₂, RuS₂, MoS₂, WS₂, IrO₂, CeO₂, InO₂, TaO₂, ZnO, SnO₂, BaTiO₃, SrTiO₃ oder Indium-Zinn-Oxide mit spezifischen Oberflächen zwischen 10 m²/g und 400 m²/g. Lithium-Einschlussverbindungen wie LiMn₂O₄, LiNiO₂, LiCoO₂ oder Li(NiCo)O₂ können ebenfalls verwendet werden, so wie es in der oben genannten Patentanmeldung EP 1'244'114 beschrieben wird.

Die elektrisch aktiven Filme enthalten diese nanokristallinen, nanoporösen Übergangsmetalloxide, Übergangsmetallchalkogenide oder deren Lithium-Einschlussverbindungen in einer Menge zwischen 1 g/m² und 100 g/m², vorzugsweise zwischen 3 g/m² und 50 g/m². Diese Mengen entsprechen Trockenschichtdicken zwischen 1 µm und 100 µm, beziehungsweise 3 µm und 50 µm.

Die Menge des filmbildenden Bindemittels sollte so gering wie möglich sein, aber trotzdem genügend hoch, um eine gute Haftung zwischen der elektrisch aktiven Schicht und dem Träger zu erzielen. Geeignete Mengen liegen gewichtsmässig zwischen 0.5 % und 20 % des filmbildenden Bindemittels bezogen auf die Gesamtmenge der nanokristallinen, nanoporösen Übergangsmetalloxide, Übergangsmetallchalkogenide oder deren Lithium-Einschlussverbindungen.

Bevorzugt werden elektrisch aktive Filme, die auf einem Träger mindestens eine elektrisch aktive Schicht aufweisen und darüber eine elektrisch inaktive Schicht. Vorzugsweise enthält die elektrisch inaktive Schicht ein filmbildendes Bindemittel und ein elektrisch inaktives Pigment.

Besonders bevorzugt sind elektrisch aktive Filme, bei denen die elektrisch inaktive Schicht als Pigment γ-Al₂O₃ und Polyvinylalkohol als Bindemittel enthält, das Verhältnis zwischen Bindemittel und dem elektrisch inaktiven Pigment zwischen 1 : 5 und 1 : 40, insbesondere zwischen 1:10 und 1 : 30 beträgt und die Dicke zwischen 2 µm und 20 µm, insbesondere zwischen 4 µm und 15 µm liegt.

Die Erfindung stellt ein Verfahren zur Herstellung, zur Beschichtung und Trocknung von Lösungen bereit, die nanokristalline, nanoporöse anorganische Verbindungen enthalten, wobei der erstarrungsfördernde Einfluss gewisser Substanzen dazu verwendet wird, die Erstarrung der flüssigen Filme auf dem bewegten Träger unmittelbar nach dem Beschichtungsschritt zu beschleunigen, ohne dass ein zusätzlicher Beschichtungsschritt nötig wäre und ohne Viskositätsinstabilitäten, wie sie normalerweise beim Einsatz erstarrungsfördernder Substanzen auftreten.

Ein Vorteil des erfindungsgemässen Verfahrens ist, dass grosse Mengen der erstarrungsfördernden Substanz oder Substanzen in der Hilfsbeschichtungslösung verwendet werden können. Dis Viskosität der Hauptbeschichtungslösung ist konstant, auch wenn die Eigenschaften des Endprodukts diese grossen Mengen erstarrungsfördernder Substanzen bedingen. Zusätzlich kann die Konzentration der nanokristallinen, nanoporösen anorganischen Verbindungen in der Hauptbeschichtungslösung erhöht werden, ohne dass daraus ein instabiles Viskositätsverhalten resultiert. Folgen sind eine geringere Trocknerbelastung oder eine höhere Beschichtungsgeschwindigkeit bei vorgegebener Trocknungskapazität.

Die vorliegende Erfindung zeigt den unerwarteten Vorteil, dass die Erstarrung der aufgetragenen Schichte bei Abkühlung beschleunigt wird, wenn die erstarrungsfördernde Substanz aus der Hauptbeschichtungslösung in die Hilfsbeschichtungslösung transferiert wird. Dieser Effekt kann folgendermassen erklärt werden: Zusätze - mit oder ohne erstarrungsfördernde Eigenschaften - werden den Beschichtungslösungen, welche die nanokristallinen, nanoporösen anorganischen Verbindungen enthalten, normalerweise wegen ihrer beschränkten Löslichkeit als verdünnte, meistens wässrige Lösungen zugefügt. Die Wegnahme dieser Zusätze aus der Hauptbeschichtungslösung ist deshalb eine wirksame Massnahme, um die Konzentration der nanokristallinen, nanoporösen anorganischen Verbindungen in der Hauptbeschichtungslösung zu erhöhen. Diese höhere Konzentration erhöht die Erstarrungsgeschwindigkeit der Lösungen, welche die nanokristallinen, nanoporösen anorganischen Verbindungen enthalten, bei der Abkühlung stark.

Unerwartet wurde auch gefunden, dass die Oberfläche der Hilfsschicht beim Auftreffen der heissen Trocknungsluft kaum gestört wird und die Eigenschaften des Endprodukts nicht beeinträchtigt, auch wenn sie zuoberst liegt, eine tiefe Viskosität aufweist und bei Abkühlung allein nicht erstarren würde. Dieser Fall tritt auf, wenn die Menge der aufgetragenen Hilfsbeschichtungslösung kleiner als 25 g/m², vorzugsweise kleiner als 20 g/m² ist.

Die Erfindung stellt somit ein Verfahren nach Anspruch 1 zur Beschichtung eines bewegten Trägers zur Verfügung, bei dem der beschichtete Träger eine besonders homogene Oberfläche auch bei hohen Beschichtungsgeschwindigkeiten und Trocknung durch aufprallende, heisse Luft hat und die Anzahl der Beschichtungsfehler gering ist.

Das beschriebene Verfahren kann in den im Beschichtungs- und Trocknungsgewerbe vorhandenen klassischen Anlagen verwendet werden, beispielsweise bei der Herstellung von Aufzeichnungsmaterialien für den Tintenstrahldruck oder von elektrisch aktiven Filmen. Dabei wird in einer Trägerbeschichtungsanlage der Träger über Rollen rund um die Giesswalze geführt, die den Träger beim Auftrag der Beschichtungslösungen mit einem geeigneten System stützt. Der Auftrag der Beschichtungslösungen kann mittels geeigneter, dem Fachmann bekannten Mehrschichtgussverfahren erfolgen, wie beispielsweise dem Kaskadenguss, dem Vorhangguss oder dem Extrusionsguss und ähnlichen Verfahren. Nach dem Auftrag der flüssigen Beschichtungslösungen wird der beschichtete Träger durch eine Abkühlzone und aufeinanderfolgende Trocknerzonen geführt, in denen das Lösungsmittel aus den Schichten entfernt wird.

Die vorliegende Erfindung wird durch die folgenden Beispiele näher beschrieben, ohne dass durch diese speziellen Beispiele das beanspruchte Verfahren in irgendeiner Weise eingeschränkt würde.

### Beispiele

### Beispiel 1

Eine erste Hauptbeschichtungslösung für die Herstellung der Tintenaufnahmeschicht eines Aufzeichnungsmaterials für den Tintenstrahldruck mit den in Tabelle 1 aufgeführten Bestandteilen wurde hergestellt. Die Mengen, mit Ausnahme derjenigen des Wassers, sind die der aufgetragenen und getrockneten Tintenaufnahmeschicht.

**Tabelle 1**

| Bestandteil (Konzentration) | Menge (g/m²) |
|---|---|
| Lanthan-dotiertes AIOOH (Festsubstanz) | 48.000 |
| Milchsäure (90%) | 0.780 |
| Polyvinylalkohol A (10.0 %) | 1.440 |
| Polyvinylalkohol B (7.5 %) | 2.880 |
| Weichmacher 1 (40 %) | 1.440 |
| Weichmacher 2 (50 %) | 0.200 |
| Netzmittel (3 %) | 0.208 |
| Wasser | 153.752 |
| Total | 208.700 |

Das lanthandotierte AIOOH wurde nach dem in Beispiel 1 der Patentanmeldung EP 0'967'086 beschriebenen Verfahren hergestellt. Polyvinylalkohol A ist Mowiol 26-88, Polyvinylalkohol B ist Mowiol 56-98, beide erhältlich bei Omya AG, Oftringen, Schweiz; der Weichmacher 1 ist 1,1,1-Tris-(hydroxymethyl)-propan, erhältlich bei Fluka-Chemie, Buchs, Schweiz; der Weichmacher 2 ist Glycerin; das Netzmittel ist Triton X-100, erhältlich bei Christ Chemie AG, Reinach, Schweiz.

Eine zweite Beschichtungslösung für die Hilfsschicht mit den in Tabelle 2 aufgeführten Bestandteilen wurde hergestellt. Die Mengen, mit Ausnahme derjenigen des Wassers, sind die der aufgetragenen und getrockneten Hilfsschicht.

**Tabelle 2**

| Bestandteil (Konzentration) | Menge (g/m²) |
|---|---|
| Lanthan-dotiertes AIOOH (Festsubstanz) | 2.000 |
| Milchsäure (90%) | 0.032 |
| Polyvinylalkohol A (10.0 %) | 0.060 |
| Polyvinylalkohol B (7.5 %) | 0.120 |
| Weichmacher 1 (40 %) | 0.060 |
| Weichmacher 2 (50 %) | 0.010 |
| Netzmittel (3 %) | 0.020 |
| Borsäure (5 %) | 0.600 |
| Wasser | 18.098 |
| Total | 21.000 |

Borsäure ist bei Schweizerhall Chemie, Schweizerhalle, Schweiz erhältlich.

Ein Vorganggiesser wurde zum Auftragen dieser Lösungen auf einen durchsichtigen Polyesterträger verwendet. Beide Schichten wurden mittels des Mehrschichtvorhanggusses gemeinsam auf den Träger aufgebracht, wobei die Hilfsbeschichtungslösung als oberste Schicht aufgebracht wurde. 208.7 g/m² der Hauptbeschichtungslösung von Tabelle 1 wurden zusammen mit 21.0 g/m² der Hilfsbeschichtungslösung von Tabelle 2 auf den Träger aufgebracht. Unmittelbar nach der Beschichtung wurde der beschichtete Träger während einer vorbestimmten Zeit in einer Abkühlzone bei einer Temperatur von 10° C gehalten und anschliessend durch Aufblasen von heisser Luft bei einer Geschwindigkeit von etwa 37 m/s durch ein System von Düsen getrocknet. Die Verweilzeit in der Abkühlzone (zwischen der Beschichtung und der Trocknung) betrug 20 Sekunden. Die Widerstandsfähigkeit der erstarrten Schichten nach der Abkühlung wurde durch eine visuelle Beobachtung des getrockneten, beschichteten Trägers beurteilt, wo ein dem Fachmann wohlbekannter Fehler, Düsenstreifen genannt, sichtbar sein kann. Dieser Fehler - Dichte- oder Glanzunterschiede in Längsrichtung - entsteht durch lokale Deformationen der Oberfläche der aufgetragenen Schichten beim Aufprallen der heissen Luft im Trockner.

Eine fünfstufige Skala wurde für die Bewertung verwendet:
- 1 (am besten): keine Düsenstreifen sichtbar
- 2: Düsenstreifen gerade sichtbar
- 3: Düsenstreifen gut sichtbar
- 4: scharf begrenzte Düsenstreifen und Querstörungen
- 5 (am schlechtesten): Schichten vom Träger weggeblasen

Die Qualität der aufgebrachten Schichten war vernünftig und wurde mit Note 2 bewertet. Das Viskositätsverhalten der Lösungen aus den Tabellen 1 und 2 war sehr gut, es wurde kein Viskositätsanstieg beobachtet.

### Beispiel 2

Eine Hauptbeschichtungslösung für die Herstellung einer weiteren Tintenaufnahmeschicht mit den in Tabelle 3 aufgeführten Bestandteilen wurde hergestellt. Die Mengen, mit Ausnahme derjenigen des Wassers, sind die der aufgetragenen und getrockneten Tintenaufnahmeschicht.

**Tabelle 3**

| Bestandteil (Konzentration) | Menge (g/m²) |
|---|---|
| Lanthan-dotiertes AIOOH (Festsubstanz) | 45.000 |
| Milchsäure (90%) | 0.732 |
| Polyvinylalkohol A (10.0 %) | 1.350 |
| Polyvinylalkohol B (7.5 %) | 2.700 |
| Weichmacher 1 (40 %) | 1.015 |
| Weichmacher 2 (50 %) | 0.335 |
| Netzmittel (3 %) | 0.120 |
| Wasser | 148.748 |
| Total | 200.000 |

Eine Beschichtungslösung für die Hilfsschicht mit den in Tabelle 4 aufgeführten Bestandteilen wurde hergestellt. Die Mengen, mit Ausnahme derjenigen des Wassers, sind die der aufgetragenen und getrockneten Hilfsschicht.

**Tabelle 4**

| Bestandteil (Konzentration) | Menge (g/m²) |
|---|---|
| Weichmacher 2 (50 %) | 0.335 |
| Weichmacher (3 %) | 0.011 |
| Borsäure (5 %) | 0.540 |
| Wasser | 17.114 |
| Total | 18.000 |

Beide Schichten wurden wie in Beispiel 1 mittels des Mehrschichtvorhanggusses gemeinsam auf den Träger aufgebracht, aber nun mit einer Verweilzeit in der Abkühlzone von 2 Minuten.

Die Qualität der aufgebrachten Schichten wurde mit Note 2 bewertet. Die physikalischen und bildmässigen Eigenschaften des solchermassen hergestellten Aufzeichnungsmaterials unterschieden sich nicht von den Eigenschaften des entsprechenden Aufzeichnungsmaterials, das mittels einer einzigen Beschichtungslösung, welche die erstarrungsfördernde Substanz Borsäure enthielt, hergestellt worden war.

### Beispiel 3

Das Zweischichtsystem aus Beispiel 1 wurde unter den gleichen Bedingungen auf den Träger aufgebracht mit dem Unterschied, dass die Menge der Borsäure in der Hilfsbeschichtungslösung von 600 mg/m² auf 150 mg/m² erniedrigt wurde.

Die Qualität der aufgebrachten Schichten war schlecht und wurde mit Note 4 bewertet. Zusätzlich zeigte die Oberfläche wesentlich mehr Risse im Vergleich zu Beispiel 1.

Dieses Ergebnis zeigt, dass die in der Hilfsbeschichtungslösung des Beispiels 1 enthaltene Borsäure nicht nur die Erstarrung der Hauptbeschichtungslösung fördert, sondern auch die Rissbildung im getrockneten Aufzeichnungsmaterial unterdrückt.

### Vergleichsbeispiel 1 (Stand der Technik)

Zur Hauptbeschichtungslösung aus Beispiel 1 wurden 550 mg/m² Borsäure zugesetzt. Diese Lösung wurde dann mittels Vorhangguss als Einzelschicht unter den gleichen Bedingungen auf den Träger aufgebracht.

Die Qualität der aufgebrachten Schicht war schlecht und wurde mit Note 3 bewertet, im Vergleich zu Beispiel 1 waren die Düsenstreifen wesentlich ausgeprägter. Die erstarrte Schicht war damit nach der Abkühlung wesentlich weniger stabil gegen durch die aufprallende heisse Luft bewirkten Störungen.

Zusätzlich stieg die Viskosität der Beschichtungslösung infolge der darin enthaltenen, relativ hohen Borsäuremenge im Lauf der Zeit stark an. Die fehlende Stabilität der Beschichtungslösung führte zur Bildung von Aggregaten, die nach der Beschichtung auf dem Träger weitere Beschichtungsstörungen verursachten.

### Vergleichsbeispiel 2 (Stand der Technik)

Die beiden Beschichtungslösungen aus Beispiel 2 wurden miteinander vermischt und mit der Summe der beiden Auftragsmengen aus Beispiel 2 auf den Träger aufgebracht.

Die Qualität der aufgebrachten Schicht wurde bei 2 Minuten Abkühlzeit mit Note 3 bewertet. Die Qualität konnte durch eine Verlängerung der Abkühlzeit verbessert werden, aber die Qualität war durchgehend etwa eine Note schlechter als in Beispiel 2 bei gleichen Kühl- und Trocknungsbedingungen.

Diese Ergebnisse zeigen, dass die erstarrungsfördernde Wirkung der Borsäure in der vorliegenden Erfindung wesentlich höher ist als auf Grund des Standes der Technik zu erwarten war.

## Patentansprüche

1. Verfahren zur Beschichtung eines bewegten Trägers mit einer Beschichtungslösung, die eine oder mehrere nanokristalline, nanoporöse anorganische Verbindungen und ein oder mehrere Bindemittel gewichtsmässig in einer Menge zwischen 2 % bis 30 % bezogen auf die Gesamtmenge der nanokristallinen, nanoporösen anorganischen Verbindungen enthält, zusammen mit einer Hilfsbeschichtungslösung, welche mindestens eine erstarrungsfördernde Substanz enthält, welche die Erstarrung der Beschichtungslösung fördert, **dadurch gekennzeichnet, dass** der beschichtete Träger unmittelbar nach dem Aufbringen der Beschichtungslösungen und vor der Trocknung auf eine Temperatur von 10° C oder weniger abgekühlt wird.

2. Verfahren nach Anspruch 1, **dadurch gekennzeichnet, dass** die Beschichtungslösung, welche die nanokristallinen, nanoporösen anorganischen Verbindungen enthält, zusammen mit der Hilfsbeschichtungslösung, welche die erstarrungsfördernde Substanz enthält, gemeinsam mittels Kaskadenguss oder Vorhangguss auf den bewegten Träger aufgebracht werden.

3. Verfahren nach Anspruch 1, **dadurch gekennzeichnet, dass** die Hilfsbeschichtungslösung als oberste Schicht des Schichtsystems angeordnet ist, welches die Schicht einschliesst, welche die nanokristallinen, nanoporösen anorganischen Verbindungen enthält.

4. Verfahren nach Anspruch 1, **dadurch gekennzeichnet, dass** die Bindemittel kein thermoreversibles Erstarrungsverhalten besitzen.

5. Verfahren nach Anspruch 1, **dadurch gekennzeichnet, dass** die erstarrungsfördernde Substanz ein Härter, Borsäure oder ein Borat ist.

6. Verfahren nach Anspruch 1, **dadurch gekennzeichnet, dass** als Träger unbeschichtetes oder beschichtetes Papier, durchsichtiger oder opaker Polyesterfilm oder ein faserförmiges Textilmaterial verwendet wird.

7. Verfahren nach Anspruch 1, **dadurch gekennzeichnet, dass** die Beschichtungslösung, welche die nanokristallinen, nanoporösen anorganischen Verbindungen enthält, die Tintenaufnahmeschicht eines Aufzeichnungsmaterials für den Tintenstrahldruck bildet.

8. Verfahren nach Anspruch 7, **dadurch gekennzeichnet, dass** als nanokristalline, nanoporöse anorganische Verbindung kolloidales Aluminiumoxid, kolloidales Aluminiumoxid-hydroxid oder deren Gemisch verwendet wird.

9. Verfahren nach Anspruch 7, **dadurch gekennzeichnet, dass** als nanokristalline, nanoporöse anorganische Verbindung kolloidales γ-Al₂O₃ oder Pseudo-Böhmit verwendet wird.

10. Verfahren nach Anspruch 7, **dadurch gekennzeichnet, dass** als nanokristalline, nanoporöse anorganische Verbindung kolloidales Aluminiumoxid-hydroxid oder Pseudo-Böhmit verwendet wird, welche 0.4 bis 4.2 Molprozent eines oder mehrerer Elemente der Gruppe der Seltenen Erden (Ordnungszahlen 57 bis 71 des Periodischen Systems der Elemente) bezogen auf Al₂O₃ enthalten.

11. Verfahren nach Anspruch 7, **dadurch gekennzeichnet, dass** als nanokristalline, nanoporöse anorganische Verbindung kolloidales Siliziumdioxid verwendet wird.

12. Verfahren nach Anspruch 11, **dadurch gekennzeichnet, dass** das kolloidale Siliziumdioxid positiv geladen ist.

13. Verfahren nach Anspruch 1, **dadurch gekennzeichnet, dass** die Beschichtungslösung, welche die nanokristallinen, nanoporösen anorganischen Verbindungen enthält, die elektrisch aktive Schicht eines elektrisch aktiven Films bildet.

14. Verfahren nach Anspruch 13, **dadurch gekennzeichnet, dass** als nanokristalline, nanoporöse anorganische Verbindung TiO₂, MnO₂, Indium-Zinn-Oxid, LiMn₂O₄, LiNiO₂, LiCoO₂ oder Li(NiCo)O₂ mit spezifischen Oberflächen zwischen 10 m²/g und 400 m²/g verwendet wird.

## Claims

1. A method for coating a moving web with a coating solution containing one or more nanocrystalline, nanoporous inorganic compounds and one or more binders in an amount of from 2 % to 30 % by weight of the nanocrystalline, nanoporous inorganic compounds, together with an auxiliary coating solution containing at least one gelation-promoting ingredient which promotes the gelation of the coating solution, **characterized in that** the coated web is chilled to a temperature of 10° C or less immediately after coating and before drying.

2. A method according to claim 1, **characterized in that** the coating solution containing the nanocrystalline, nanoporous inorganic compounds and the auxiliary coating solution are applied simultaneously to the web according to the slide-coating or curtain-coating technique.

3. A method according to claim 1, **characterized in that** the auxiliary coating solution is the uppermost layer of a multilayer assembly which includes the layer containing the nanocrystalline, nanoporous inorganic compounds.

4. A method according to claim 1, **characterized in that** the binders do not have a thermo-reversible gelling behaviour.

5. A method according to claim 1, **characterized in that** the gelation-promoting ingredient is a cross-linking agent, boric acid or a borate.

6. A method according to claim 1, **characterized in that** the web is selected from coated or uncoated paper, transparent or opaque polyester film and fibrous textile materials.

7. A method according to claim 1, **characterized in that** the coating solution containing the nanocrystalline, nanoporous inorganic compounds forms the ink-receiving layer of a recording sheet for ink jet printing.

8. A method according to claim 7, **characterized in that** the nanocrystalline, nanoporous inorganic compound is colloidal aluminium oxide, colloidal aluminium oxide/hydroxide, or a mixture thereof.

9. A method according to claim 7, **characterized in that** the nanocrystalline, nanoporous inorganic compound is colloidal γ-Al₂O₃ or pseudo-boehmite.

10. A method according to claim 7, **characterized in that** the nanocrystalline, nanoporous inorganic compound is aluminium oxide/hydroxide or pseudo-boehmite comprising one or more of the elements of the rare earth metal series of the periodic system of the elements with atomic numbers 57 to 71 in an amount of from 0.4 to 2.5 mole percent relative to Al₂O₃.

11. A method according to claim 7, **characterized in that** the nanocrystalline, nanoporous inorganic compound is colloidal silicium dioxide.

12. A method according to claim 11, **characterized in that** the colloidal silicium dioxide is positively charged.

13. A method according to claim 1, **characterized in that** the coating solution containing the nanocrystalline, nanoporous inorganic compounds forms the electrically active layer of an electrically active film.

14. A method according to claim 13, **characterized in that** the nanocrystalline, nanoporous inorganic compound is TiO₂, MnO₂, indium-tin-oxide, LiMn₂O₄, LiNiO₂, LiCoO₂ or Li(NiCo)O₂ with specific surfaces between 10 m²/g and 400 m²/g.

## Revendications

1. Procédé pour le revêtement d'un support en mouvement avec une solution d'étendage qui contient un ou plusieurs composés nanocrystallins, nanoporeux minéraux et un ou plusieurs liants en quantité pondérale de 2 % à 30 % par rapport à la quantité totale des composés nanocrystallins, nanoporeux minéraux, combinée avec une solution d'étendage auxiliaire, qui contient au moins un composé accélérant le figeage et hâtant le figeage de la solution d'étendage, **caractérisé en ce que** le support enduit est refroidi à une température de 10° C ou moins immédiatement après l'étendage et avant le séchage.

2. Procédé selon la revendication 1, **caractérisé en ce que** la solution d'étendage qui contient les composés nanocrystallins, nanoporeux minéraux est étendue simultanément avec la solution d'étendage auxiliaire qui contient le composé accélérant le figeage, par le procédé d'étendage en rideau ou par le procédé d'étendage en cascade.

3. Procédé selon la revendication 1, **caractérisé en ce que** la solution d'étendage auxiliaire est la couche supérieure du système de couches qui renferme la couche qui contient les composés nanocrystallins, nanoporeux minéraux.

4. Procédé selon la revendication 1, **caractérisé en ce que** les liants ne montrent pas un comportement de figeage thermo-réversible.

5. Procédé selon la revendication 1, **caractérisé en ce que** le composé accélérant le figeage est un durcisseur, l'acide borique ou un borate.

6. Procédé selon la revendication 1, **caractérisé en ce que** le support est le papier normal ou enduit, le polyester transparent ou opaque ou un matériel textile fibreux.

7. Procédé selon la revendication 1, **caractérisé en ce que** la solution d'étendage qui contient les composés nanocrystallins, nanoporeux minéraux forme la couche réceptrice d'encre d'une feuille d'enregistrement pour l'impression par jet d'encre.

8. Procédé selon la revendication 7, **caractérisée en ce que** le composé nano-crystallin, nanoporeux minéral est l'oxyde d'aluminium colloïdal, l'oxyde/hydroxyde d'aluminium colloïdal ou leur mélange.

9. Procédé selon la revendication 7, **caractérisé en ce que** le composé nano-crystallin, nanoporeux minéral est le γ-oxyde d'aluminium colloïdal ou la pseudo-bohémite.

10. Procédé selon la revendication 7, **caractérisé en ce que** le composé nano-crystallin, nanoporeux minéral est l'oxyde/hydroxyde d'aluminium ou la pseudo-bohémite qui contient 0.04 à 4.2 pour cent molaires des éléments de la série des métaux des terres rares ayant les numéros atomiques 57 à 71 de la classification périodique des éléments par rapport à l'Al₂O₃.

11. Procédé selon la revendication 7, **caractérisé en ce que** le composé nanocrystallin, nanoporeux minéral est le dioxyde de silicium colloïdal.

12. Procédé selon la revendication 11, **caractérisé en ce que** le dioxyde de silicium colloïdal est chargé positivement.

13. Procédé selon la revendication 1, **caractérisé en ce que** la solution d'étendage qui contient les composés nanocrystallins, nanoporeux minéraux forme la couche électroactive d'un film électroactif.

14. Procédé selon la revendication 13, **caractérisé en ce que** le composé nanocrystallin, nanoporeux minéral est le TiO₂, le MnO₂, l'oxyde d'indium et d'étain, le LiMn₂O₄, le LiNiO₂, le LiCoO₂ ou le Li(NiCo)O₂ ayant une surface spécifique entre 10 m²/g et 400 m²/g.
